# EUROPEAN PATENT SPECIFICATION

(11) **EP 0 644 417 B1**
(45) Date of publication and mention of the grant of the patent: **03.05.2000**
(21) Application number: 94114358.8
(22) Date of filing: 13.09.1994
(51) Int. Cl.: G01N 21/90

(54) **Inspection of translucent containers**
Prüfung von durchsichtigen Behältern
Inspection de récipients transparents

(30) Priority: 16.09.1993 US 122843
(43) Date of publication of application: 22.03.1995
(73) Proprietor: OWENS-BROCKWAY GLASS CONTAINER INC., Toledo, Ohio 43666 (US)
(72) Inventor: Nicks, Timothy J., Maumee, Ohio 43537 (US); Ringlien, James A., Maume, Ohio 43537 (US)
(74) Representative: Blumbach, Kramer & Partner GbR

(56) References cited:
- FR-A- 1 369 597
- GB-A- 1 115 542
- GB-A- 2 133 538
- US-A- 3 588 258
- US-A- 3 639 067
- PATENT ABSTRACTS OF JAPAN vol. 4, no. 156 (P-34) (638) 31 October 1980 & JP-A-55 104 744 (SHIMAZU SEISAKUSHO) 6 February 1979

## Description

The present invention is directed to an apparatus and method for detecting checks and or split seams in a translucent container, according to the preamble of claim 1.

### Background of the Invention

In the manufacture of translucent containers such as clear or colored glass bottles, various types of checks or other commercial variations can occur in the sidewalls of the containers. For example, variations known as split seams and vertical checks may be present in the sidewall of a container. These split seams and vertical cheeks are mirror-like reflective cracks that lie in a plane and extend generally radially from the longitudinal axis of the container. Many devices have been proposed for detecting such variations.

An apparatus referred to above (GB-A-2133538 = US-A-4,384,469) is a device for detecting split seams and vertical checks in the sidewall of a glass container. A light source is positioned to one side of the container to direct light energy onto the container wall from a direction perpendicular and lateral to the container axis. The light source comprises an incandescent bulb and a cylindrical lens for projecting an image of the bulb filament onto the container sidewall in an elongated narrow tightly focused strip parallel to the container axis. A linear array camera is positioned to receive an image of the illuminated portion of the container from a direction perpendicular to the illumination and container axes. As the container is held in position and rotated about its axis, a radial planar check will eventually be rotated into a position to reflect light from the source to the detector. Thus, the vertical check or split seam is detected as a bright spot on what is otherwise a normally gray or dark background viewed by the detector. (Directional terms such as "vertical" assume vertical orientation of the container axis with the mouth opening upwardly, as is typical in the container inspection art.)

Although the device disclosed in the noted patent has enjoyed substantial commercial success, further improvements remain desirable. In particular, the device disclosed in the noted patent is limited in its ability to detect checks that are not precisely vertical and parallel to the container axis. That is, if a check is non-vertical, light incident on the check will be reflected by the check but not necessarily incident on the camera.

US-A-3,588,258 shows fiber-optic bundles which illuminate an article from the inner side thereof, whereas receiving optical bundles are arranged on the opposite side of the wall to be inspected. This does not follow the principles of invention.

### Summary of the Invention

It is therefore a general object of the present invention to provide an apparatus and method of the general character referred to above having enhanced ability to detect and inspect non-vertical radial cheeks and split seams in the container sidewall.

The invention is defined in claims 1 and 9.

Apparatus for detecting checks in the sidewall of a translucent container includes a light source for illuminating an elongated strip of the container sidewall parallel to the central axis of the container in such a way that illumination rays are incident at any point of the strip from multiple differing angles. A camera is positioned externally of the container for receiving light reflected by checks in the illuminated strip, and electronic circuitry is coupled to the camera for detecting checks in the container as a function of such reflected light. Since the light rays at any point in the elongated illuminated strip on the container sidewall are incident from multiple differing angles, as distinguished from substantially unidirectional illumination in the above-noted patent, planar checks in the container sidewall that are not precisely vertical in orientation will have a greater chance of reflecting light energy from the source onto the camera.

In the preferred embodiment of the invention herein disclosed, the light source comprises a fiber-optic ribbon having ends disposed in an essentially linear array optically parallel to the container axis, and a cylindrical lens disposed between the fiber-optic ribbon array and the container for focusing light from the array in a direction perpendicular to the container axis to form the narrow elongated illumination strip. In this way, the light rays incident on the container sidewall are oriented at multiple angles essentially in a plane parallel to the container axis. The fiber-optic ribbon has a dimension parallel to the central axis of the container at least as great as the longitudinal dimension of the illuminated strip. The camera preferably comprises a linear array of light sensitive elements optically parallel to the container axis and the illuminated strip, with the camera array being scanned by detection electronics at increments of container rotation.

### Brief Description of the Drawings

The invention, together with additional objects, features and advantages thereof, will be best understood from the following description, the appended claims and the accompanying drawings in which:
FIG. 1 is a functional block diagram of apparatus for inspecting translucent containers in accordance with the present invention;
FIG. 2 is a schematic diagram of a portion of the container and a portion of the light source in the apparatus of FIG. 1;
FIG. 3 is an end elevational view of a portion of the light source taken substantially along the line 3-3 in FIG. 2;
FIG. 4 is a top plan view of a portion of the light source illustrated in FIGS. 1-3; and
FIG. 5 is a fragmentary sectional view taken substantially along the line 5-5 in FIG. 4.

### Detailed Description of Preferred Embodiment

Referring to the drawings, a conveyor 20, typically including a starwheel (not shown) and a slide plate 21, is so disposed and connected to a source of molded containers as to bring successive containers 22 into position at an inspection station 24. conveyor 20 may be of any suitable type, such as those shown in U.S. Patent Nos. 4,230,219 and 4,378,493 as well as above-noted U.S. Patent No. 4,584,469, and would typically include a rotatable starwheel for bringing successive containers into position and holding the containers in fixed position during the scanning operation. A container rotating device 26, such as a drive roller, is positioned to engage container 22 at station 24 and to rotate the container about its central axis 23. An encoder or the like is coupled the container rotation mechanism to provide signals indicative of increments of container rotation. Alternatively, with the container rotating at constant speed, increments of container rotation may be inferred by increments of time.

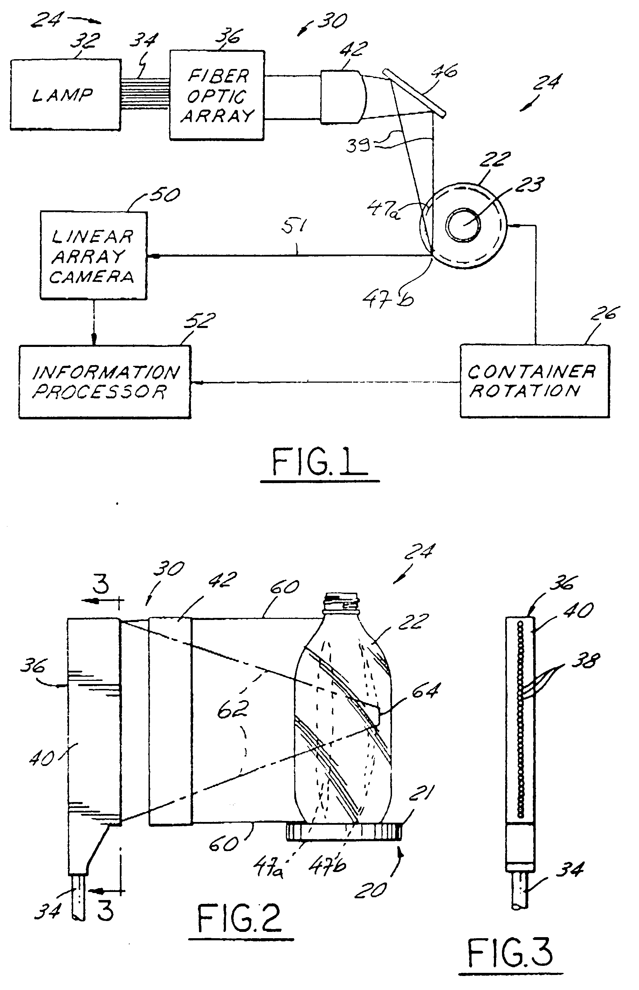

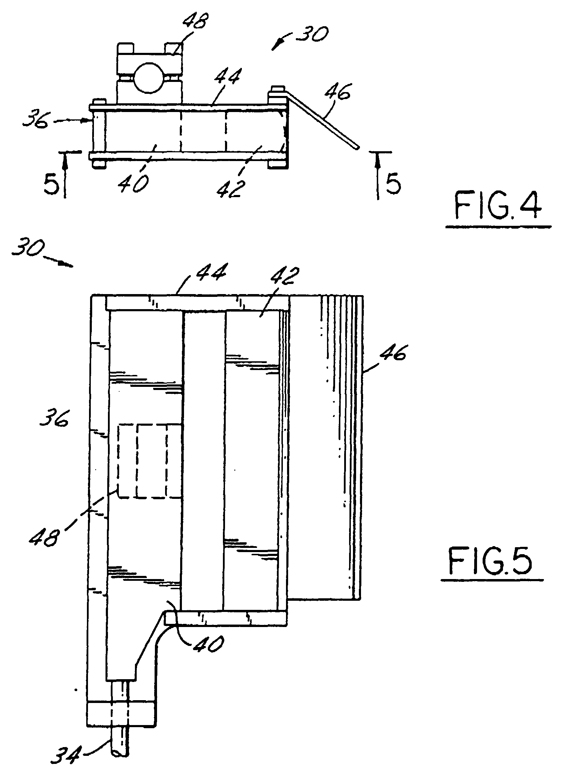

A light source 30 is positioned to one side of container 22 at station 24 for directing light energy on the container at the station. Light source 30 comprises a lamp 32 with power supply and is connected by a fiber-optic bundle 34 to a fiber-optic array 36. As shown in FIG. 3, fiber-optic array 36 comprises a linear essentially one-dimensional array of individual fiber-optic elements 38. Preferably, fiber-optic cable 34 feeds into a housing 40 in which the bundle 34 is essentially fanned into a plane that is essentially one fiber-optic element thick, with the end faces of the fiber-optic elements 38 thereby terminating in the linear array illustrated in FIG. 3. Fiber-optic array 36 preferably comprises several hundred individual fiber-optic elements 38 fanned into the planar array forming a ribbon (FIG. 3). A cylindrical lens 42 is mounted by suitable bracketry 44 (FIGS. 4 and 5) at a position spaced from the fiber-optic array 36. A mirror 46 is fastened to light source bracketry 44 at an angle to lens 42 for reflecting light energy from array 36 and lens 42 through the sidewall of container 22, at which the light is focused to a narrow vertical strip 47 (actually two strips 47a, 47b at the front and rear sides, respectively, of the container 22, seen from the mirror 46, are illuminated). A clamp 48 is fastened to light source bracketry 44 for vertically and angularly adjusting orientation of the assembly relative to the container at inspection station 24.

A camera 50 (FIG. 1) having a linear array photosensitive means or elements is positioned relative to container 22 at station 24 for receiving light energy from light source 30 reflected by checks in the container sidewall. Preferably, an axis 51 of the camera 50 for viewing to the illuminated strip 47 is chosen which is perpendicular to the plane of illumination by the light source 30, some deviation from that plane being possible. Camera 50 includes a linear array of photosensitive elements, the light receiving surfaces thereof being oriented optically parallel to axis 23 of container 22 at inspection station 24. An information processor 52 is coupled to linear array camera 50 and container rotation mechanism 26 for scanning the elements of camera 50 at increments of container rotation, and thereby receiving from the camera image data indicative of any checks in the sidewall of container 22 that reflect light from source 30 onto the camera. Linear array camera 50, information processor 52 and container rotation mechanism 26 may be of known type. Alternatively, camera 50 may be an area array camera.

The ends of the individual fiber-optic elements 38 function in effect as individual light sources from which light rays emerge and diverge toward cylindrical lens 42. Lens 42 functions to focus the light rays 39 in the plane of FIG. 1 and planes parallel thereto, which are perpendicular to the container axis 23 but does not substantially affect or bend the path of travel of such individual light rays which are contained in planes parallel to the container axis 23 or, in effect, take an acute angle to the container axis, as shown in FIG. 2 by the light rays 62. Thus, the light rays from the individual fiber-optic element ends 38 diverge and intersect each other so that, when incident on the container sidewall, they travel essentially in a "tightly focused plane" which is parallel to the container axis, but intersect and illuminate the container sidewall from multiple differing angles within that "plane". The overall vertical dimension of the illumination beam may be limited as illustrated by the solid lines 60 in FIG. 2, while the light rays 62 illustrate the angles of illumination of a check or split seam 64 in the sidewall of container 22. Because of the multiple differing angles at which the light is incident on split seam 64, the likelihood of detecting the split seam 64 at camera 50 is greatly enhanced even if the split seam is not oriented exactly or substantially parallel to the container axis 23.

## Claims

1. Apparatus for detecting checks and/or split seams (64) in a translucent container (22) having a sidewall and a central axis comprising:
a source (30) of light for illuminating an elongated narrow strip (47) of the container sidewall parallel to the container axis (23),
a camera (50) positioned externally of the container (22) for receiving light reflected by checks (64) in the illuminated strip (47) of the container (22) along a reflection axis (51) preferably perpendicular to the axis of illumination from said light source, and
means (52) responsive to said camera for detecting checks in the container as a function of such reflected light,
characterized in that
said light source (30) is connected to a single linear array (36) of individual light sources formed by individual fiber-optic elements (38) having ends which function in effect as said individual light sources from which light rays (39) emerge which are focused toward said strip, wherein said light rays (39) illuminating said strip (47) are incident at any point of said strip from multiple angles essentially coplanar with each other and with the strip.

2. The apparatus set forth in claim 1 wherein said camera (50) comprises a linear array of light sensitive elements optically parallel to the container axis.

3. The apparatus set forth in claim 2 further comprising:
means (26) for rotating the container (22) about its central axis (23), and means (52) for scanning said linear array of light sensitive elements at increments of container rotation.

4. The apparatus set forth in any preceding claim wherein said array (36) of fiber-optic elements (38) is in the form of a fiber-optic ribbon which has a first end coupled to said light source (30) and a second end disposed optically parallel to said illuminated strip (47) of the container sidewall.

5. The apparatus set forth in any of claims 1 to 4 wherein said array (36) of fiber optic elements (38) forms a fiber optic bundle (34) which is fanned into a plane near those fiber ends which form said individual light sources.

6. The apparatus set forth in any of claims 1 to 5 wherein a cylindrical lens (42) is provided for focusing light from the ends of said fiber optic elements (38) in said narrow strip (47).

7. The apparatus set forth in claim 4 wherein said fiber-optic ribbon has a dimension parallel to the central axis (23) of the container (22) at least as great as the dimension of the illuminated strip (47) of the container (22) parallel to such axis (23).

8. The apparatus set forth in any of claims 1 to 7 wherein means (48) is provided for adjustably positioning said light source (30) with respect to the container (22) and camera (50).

9. A method of inspecting translucent containers (22), comprising the steps of:
(a) producing illumination rays (39) essentially contained in a plane parallel to the container axis from fiber-optic ends (38) which are arranged in a single linear array (36) so as to illuminate an elongated strip (47) of the sidewall of the container in such a way that the illumination rays (39) diverge and intersect and are incident at any point within the strip (47) from multiple angles,
(b) directing light energy reflected by checks and split seams (64) in the illuminated strip (47) onto a photosensitive means of a camera (50), and
(c) detecting checks in the container sidewall as a function of such reflected energy.

10. The method set forth in claim 9 wherein said step (a) is carried out by directing light energy onto said illuminated strip (47) through a fiber-optic bundle (34) in which the individual optical fibers (38) are disposed in a linear array (36), the end faces thereof being optically parallel to the illuminated strip (47).

11. The method set forth in claim 10 comprising the additional step of:
(d) rotating the container (22) about its central axis (23) at an orientation in which such axis is parallel to the illuminated strip (47) on the container sidewall.

## Patentansprüche

1. Vorrichtung zum Ermitteln von Fehlern und/oder Nahtrissen (64) in einem lichtdurchlässigen Behälter (22) mit einer Seitenwand und einer Mittelachse, mit folgenden Merkmalen:
eine Lichtquelle (30) zum Beleuchten eines länglichen engen Streifens (47) der Behälterseitenwand parallel zur Behälterachse (23),
eine Kamera (50) ist außerhalb des Behälters (22) angeordnet, um das durch die Fehler (64) in dem beleuchteten Streifen (47) des Behälters (22) entlang einer Reflexionsachse (51) reflektierte Licht zu empfangen, die vorzugsweise senkrecht zur Beleuchtungsachse der Lichtquelle angeordnet ist, und
eine Einrichtung (52) spricht auf die Kamera an, um Fehler im Behälter als Funktion des reflektierten Lichtes zu ermitteln,
dadurch gekennzeichnet, daß
die Lichtquelle (30) mit einer einzigen linearen Anordnung (36) aus einzelnen Lichtquellen verbunden ist, die durch einzelne faseroptische Elemente (38) gebildet werden, die Enden aufweisen, die als die einzelne Lichtquellen wirksam sind, von denen Lichtstrahlen (39) ausgehen, die auf den Streifen hin fokusiert werden, wobei die den Streifen (47) beleuchtenden Lichtstrahlen (39) an jedem Punkt des Streifens von verschiedenen Winkeln auftreffen, und im wesentlichen in einer Ebene miteinander und mit dem Streifen liegen.

2. Vorrichtung nach Anspruch 1, dadurch gekennzeichnet, daß die Kamera (50) eine lineare Anordnung lichtempfindlicher Elemente umfaßt, die optisch parallel zur Behälterachse angeordnet sind.

3. Vorrichtung nach Anspruch 2, dadurch gekennzeichnet, daß sie ferner eine Einrichtung (26) zum Drehen des Behälters (22) um dessen Mittelachse (23) und eine Einrichtung zum Abtasten der linearen Anordnung lichtempfindlicher Elemente bei Schritten der Behälterdrehung umfaßt.

4. Vorrichtung nach einem der vorstehenden Ansprüche, dadurch gekennzeichnet, daß die Anordnung (36) mit den faseroptischen Elementen (38) in Form eines faseroptischen Bandes vorliegt, das ein erstes Ende aufweist, das mit der Lichtquelle (30) verbunden ist und ein zweites Ende aufweist, das optisch parallel zum beleuchteten Streifen (47) der Behälterseitenwand angeordnet ist.

5. Vorrichtung nach einem der Ansprüche 1 bis 4, dadurch gekennzeichnet, daß die Anordnung (36) mit den faseroptischen Elementen (38) ein Bündel (34) aus optischen Fasern bildet, das fächerartig in einer Ebene nahe den Faserenden angeordnet ist, die diese einzelnen Lichtquellen bilden.

6. Vorrichtung nach einem der Ansprüche 1 bis 5, dadurch gekennzeichnet, daß eine zylindrische Linse (42) zum Fokusieren von Licht von den Enden der faseroptischen Elemente (38) in den schmalen Streifen (47) vorgesehen ist.

7. Vorrichtung nach Anspruch 4, dadurch gekennzeichnet, daß das faseroptische Band eine Abmessung parallel zur mittleren Achse (23) des Behälters (22) aufweist, die wenigstens so groß ist, wie die Abmessung des beleuchteten Streifens (47) des Behälters (22) parallel zu der Achse (23).

8. Vorrichtung nach einem der Ansprüche 1 bis 7, dadurch gekennzeichnet, daß eine Einrichtung (48) für eine Positionseinstellung der Lichtquelle (30) hinsichtlich des Behälters (22) und der Kamera (50) vorgesehen ist.

9. Verfahren zum Überprüfen lichtdurchlässiger Behälter (22), mit folgenden Schritten:
(a) Beleuchtungsstrahlen (39) werden erzeugt, die im wesentlichen in einer Ebene parallel zur Behälterachse enthalten sind, und von den faseroptischen Enden (38) stammen, die in einer einzigen linearen Anordnung (36) angeordnet sind, um so einen länglichen Streifen (47) der Behälterseitenwand zu beleuchten, und zwar auf eine Weise, daß die Beleuchtungsstrahlen (39) divergieren und sich überschneiden und auf jeden Punkt innerhalb des Streifens (47) aus einer Vielzahl von Winkeln auftreffen,
(b) die infolge Fehler und Nahtrisse (64) in dem beleuchteten Streifen (47) reflektierte Lichtenergie wird auf eine lichtempfindliche Einrichtung einer Kamera (50) gerichtet, und
(c) Fehler in der Behälterseitenwand werden als Funktion der reflektierten Energie ermittelt.

10. Verfahren nach Anspruch 9, dadurch gekennzeichnet, daß der Schritt (a) dadurch ausgeführt wird, daß das Licht auf den beleuchteten Streifen (47) über ein Bündel (34) von optischen Fasern gerichtet wird, in dem die einzelnen optischen Fasern (38) in einer linearen Anordnung (36) angeordnet sind, wobei deren Endflächen optisch parallel zum beleuchteten Streifen (47) liegen.

11. Verfahren nach Anspruch 10, gekennzeichnet durch, den zusätzlichen Schritt:
(d) der Behälter (22) wird um seine Mittelachse (23) gedreht, und zwar in einer Ausrichtung, in der die Achse parallel zum beleuchteten Streifen (47) an der Behälterseitenwand liegt.

## Revendications

1. Dispositif pour détecter des microfissures et/ou des joints crevassés (64) dans un récipient translucide (22) ayant une paroi latérale et un axe central, comprenant :
une source (30) de lumière servant à éclairer une étroite bande allongée (47) de la paroi latérale du récipient, parallèle à l'axe (23) du récipient,
une caméra (50) placée à l'extérieur du récipient (22) pour recevoir de la lumière réfléchie par les microfissures (64) présentes dans la bande éclairée (47) du récipient (22) suivant un angle de réflexion (51) de préférence perpendiculaire à l'axe d'éclairement par ladite source de lumière, et
un moyen (52) réagissant à ladite caméra pour détecter des microfissures dans le récipient en fonction de cette lumière réfléchie,
caractérisé en ce que
ladite source (30) de lumière est couplée à un seul groupe linéaire (36) de sources individuelles de lumière formées par des fibres optiques individuelles (38) dont les extrémités servent en fait de sources individuelles précitées de lumière, depuis lesquelles des rayons lumineux (39) sortent et sont concentrés vers ladite bande, lesdits rayons lumineux (39) qui éclairent ladite bande (47) arrivant en n'importe quel point de ladite bande depuis de multiples angles sensiblement dans le même plan les uns et les autres et dans le même plan que la bande.

2. Dispositif selon la revendication 1, dans lequel ladite caméra (50) comporte un groupe linéaire d'éléments photosensibles optiquement parallèles à l'axe du récipient.

3. Dispositif selon la revendication 2, comprenant en outre :
un moyen (26) servant à faire tourner le récipient (22) autour de son axe central (23), et un moyen (52) servant à balayer ledit groupe linéaire d'éléments photosensibles suivant des incréments de rotation du récipient.

4. Dispositif selon l'une quelconque des revendications précédentes, dans lequel ledit groupe (36) de fibres optiques individuelles (38) se présente sous la forme d'un ruban de fibres optiques qui a une première extremité couplée à ladite source (30) de lumière et une deuxième extrémité disposée optiquement parallèlement à ladite bande éclairée (47) de la paroi latérale du récipient.

5. Dispositif selon l'une quelconque des revendications 1 à 4, dans lequel ledit groupe (36) de fibres optiques (38) forme un faisceau (34) de fibres optiques qui est déployé sous la forme d'un plan à proximité des extrémités des fibres formant lesdites sources individuelles de lumière.

6. Dispositif selon l'une quelconque des revendications 1 à 5, dans lequel une lentille cylindrique (42) est prévue pour concentrer dans ladite bande étroite (47) la lumière provenant des extrémités desdites fibres optiques individuelles (38).

7. Dispositif selon la revendication 4, dans lequel ledit ruban de fibres optiques a, parallèlement à l'axe central (23) du récipient (22), une dimension au moins aussi grande que la dimension de la bande éclairée (47) du récipient (22) parallèle à cet axe (23).

8. Dispositif selon l'une quelconque des revendications 1 à 7, dans lequel un moyen (48) est prévu pour disposer de manière réglable ladite source (30) de lumière par rapport au récipient (22) et à la caméra (50).

9. Procédé d'inspection de récipients translucides (22), comprenant les étapes consistant à :
(a) produire des rayons d'éclairage (39) contenus sensiblement dans un plan parallèle à l'axe du récipient, depuis des extrémités (38) de fibres optiques disposées en un seul groupe linéaire (36) de façon à éclairer une bande allongée (47) de la paroi latérale du récipient afin que les rayons d'éclairage (39) divergent et se croisent et arrivent en n'importe quel point de la bande (47) depuis de multiples angles,
(b) diriger vers un moyen photosensible d'une caméra (50) l'énergie lumineuse réfléchie par les microfissures et les joints crevassés (64) présents dans la bande éclairée (47), et
(c) détecter des microfissures dans la paroi latérale du récipient en fonction de cette énergie réfléchie.

10. Procédé selon la revendication 9, dans lequel ladite étape (a) est effectuée en dirigeant une énergie lumineuse vers ladite bande éclairée (47) par l'intermédiaire d'un faisceau (34) de fibres optiques dans lequel les fibres optiques individuelles (38) sont disposées en un groupe linéaire (36), les faces d'extrémités de celles-ci étant optiquement parallèles à la bande éclairée (47).

11. Procédé selon la revendication 10, comprenant les étapes supplémentaires consistant à :
(d) faire tourner le récipient (22) autour de son axe central (23) suivant une orientation dans laquelle cet axe est parallèle à la bande éclairée (47) sur la paroi latérale du récipient.
